(19) Europäisches Patentamt / European Patent Office / Office européen des brevets

(11) **EP 4 312 360 A1**

(12) **EUROPEAN PATENT APPLICATION**

(43) Date of publication:
**31.01.2024 Bulletin 2024/05**

(21) Application number: **22306156.5**

(22) Date of filing: **29.07.2022**

(51) International Patent Classification (IPC):
**H02P 25/062** (2016.01)

(52) Cooperative Patent Classification (CPC):
**H02P 25/062; H02P 21/09**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **IMRA Europe S.A.S.**
**06904 Sophia Antipolis (FR)**

(72) Inventors:
- **Bougnoux, Sylvain**
  **06904 Sophia-Antipolis (FR)**
- **Bendahan, Rémy**
  **06904 Sophia-Antipolis (FR)**
- **Nakano, Yuta**
  **06904 Sophia-Antipolis (FR)**
- **Martin, Philippe**
  **75006 Paris (FR)**

(74) Representative: **Novagraaf International SA**
**Chemin de l'Echo 3**
**1213 Onex, Geneva (CH)**

(54) **CONTROL OF VARYING SPEED INDUCTION MOTOR AT THE RESONANCE**

(57)    A method for controlling an induction-based motor (IM) or an air-cored resonant-induction motor (ACRIM), comprising the steps of:
- receiving a current rotor speed ($\omega_r$) from a sensor,
- selecting a stator speed ($\omega_s$) based on the current rotor speed ($\omega_r$), so as to realize a policy of motor control,
- using an indirect field-oriented control (IRFOC) adapted algorithm with the stator speed ($\omega_s$).

Fig. 4

EP 4 312 360 A1

**Description**

The present invention relates to the field of method for controlling electric machines such as motors or generators.

Method for controlling machines such as motors and generators, are known in the art, in particular method for controlling induction motor or induction generator, more recently and more particularly air-cored machines are proposed.

Induction machines, especially air-cored, may have the drawback of requiring high supply voltages.

That is, there is a need for limiting the requirement of high supply voltages for motors and generators, in particular for induction motors and induction generators.

An aim of the present invention is to overcome the disadvantages of the prior art mentioned above, and in particular to provide a method for controlling machines, able to at least reduce the requirement of high supply voltages and to improve the performances of the machine.

A first aspect of the present invention relates to a method for controlling an induction-based machine (IM) or an air-cored resonant-induction machine (ACRIM), having a rotor and a stator, comprising the steps of:

- retrieving an actual rotor speed $\omega_r$ and a setpoint of rotor speed $\omega_{rSP}$,

- setting a stator speed $\omega_s$ based on the actual rotor speed $\omega_r$, so as to stand the machine in an electrical resonance,

- using a modified indirect field-oriented control algorithm (IRFOC), with the set stator speed $\omega_s$ and the actual rotor speed $\omega_r$ as input, so that the actual rotor speed $\omega_r$ tends to the setpoint of rotor speed $\omega_{rSP}$.

In other words, it concerns a method for controlling an induction-based machine (IM) or an air-cored resonant-induction machine (ACRIM), having a rotor and a stator, and equipped with capacitors, comprising the steps of:

- retrieving an actual current rotor speed $\omega_r$, and a setpoint of rotor speed,

- selecting and setting a stator speed $\omega_s$ based on the actual current rotor speed $\omega_r$, so as to realize a policy of machine control,

- using a modified indirect field-oriented control algorithm, with the stator speed $\omega_s$ as input.

This allows a reduction of the required voltage, in particular with the resonant policy. This eases the formulation of various policies, especially with the resonant policy described below, for which it also reduces the input voltage as the power factor can now be always 1. That is, this allows to design and manufacture a machine (motor or generator) with reduced voltage in use, being due to air-cored, lighter, and cheaper. In particular, for high voltage applications, this allows to decrease the requirement of voltage from e.g. 800 V to 600 V (of course depending on the initial and selected power factor). That is, the policy is a way or manner to control the machine with a given aim.

The inventors investigate the closed-loop control of motor, in particular an Air-Cored Resonant Induction Motor. The idea is to operate at resonance, which might allow for a good efficiency while keeping the supply voltage low. This is achieved by interpreting the resonance condition as a relation giving the stator velocity (or stator speed) as a function of the rotor velocity (or rotor speed), and feeding it to a suitably modified version of (indirect) Field-Oriented Control algorithm.

Induction Motors (IM) have many advantages: they are dependable, rugged, low-maintenance, and also relatively cheap to manufacture. Nevertheless, for applications where power-to-weight matters, e.g. electric vehicles, they cannot compete with Permanent Magnet Synchronous Motors (PMSM). As a significant part of the IM weight is due to the iron core, it is appealing to get rid of it and consider air-cored motors. This has the extra benefit of eliminating iron losses. But this of course comes at a price: as the inductance values are much smaller due to the absence of ferromagnetic material, the supply voltage needs to be much higher. To circumvent the problem, the stator can be endowed with capacitors, so as to take advantage of resonance inductive coupling: this is the Air-Cored Resonant Induction Motor (ACRIM).

The present invention is concerned not with seeking interesting static operating points for the ACRIM as known in the prior art (see Z. Jin, M. Iacchetti, A. Smith, R. Deodhar, Y. Komi, A. Abduallah C. Umemura, and K. Mishima, "Air-cored resonant induction machines: Comparison of capacitor tuning criteria and experimental validation," IEEE Transactions on Industry Applications, vol. 57, no. 4, pp. 3595-3606, 2021), but with the dynamic control around such points. To this end, it is interpreted that the resonance condition as a relation giving the stator velocity $\omega s$ in function of the rotor velocity $\omega_r$, and feed it to a suitably modified version of (indirect) Field-Oriented Control (FOC) algorithm, also called IRFOC. It is considered only the case where the rotor velocity, besides the currents, are measured, but this is also applicable to "sensorless", providing some adaptations.

The modified algorithm exchanges the role of stator speed and the rotor flux, with respect to the standard IRFOC.

The model and peculiarities of the ACRIM will be discussed hereafter, the resonance equation established, the resonance equation studied, and interpreted as the basis for a control policy.

Advantageously, the setpoint of rotor speed, and a setpoint of rotor speed $\omega_{rSP}$ is desired or imposed by the user (e.g. when the machine is used as a generator).

Advantageously, the method comprises: - receiving an actual (mechanical) rotor speed $\omega_m$ from a speed sensor. The sensor may be an electrical sensor or a mechanical sensor. The sensor may be for the rotor and/or the stator. The rotor speed and/or the stator may also be estimated or deduced.

Advantageously, the method comprises: - deducting an actual rotor speed ($\omega_r$) from an actual mechanical rotor speed.

Advantageously, the modified indirect field-oriented control algorithm is an indirect field-oriented control algorithm modified for receiving at least as input the stator speed $\omega_s$

Advantageously, the modified indirect field-oriented control algorithm further accepts at least as input the setpoint of rotor speed (mechanical or electrical), and/or controller gains, and/or actual currents, and/or the actual rotor speed (mechanical or electrical).

Advantageously, the modified indirect field-oriented control algorithm outputs at least a torque setpoint (as usual), a rotor flux setpoint, and a stator currents setpoint (on each dq components).

Advantageously, the method further comprises the steps of setting a (current) stator speed at the setpoint stator speed.

Advantageously, in the electrical resonance, the reactance of the machine appears as suppressed. In other words, the policy of machine control is the electrical resonance for which the reactance of the machine appears as suppressed, in particular from a user point of view. The reactance is for an equivalent electrical circuit representing the electrical circuit of the machine (i.e. the rotor and the stator).

This allows to reduce the requirement of voltage as mentioned above.

Advantageously, the policy of machine control is realized for the actual rotor speed.

It is to be noted that the link between the mechanical rotor speed $\omega_m$ and the actual (current) rotor speed $\omega_r$ is well known: $\omega_r = n * \omega_m$, with $n$ being the number of pairs of poles. Advantageously, the policy of machine control is realized for the actual current rotor speed between zero and a maximum current rotor speed. In other words, the actual rotor speed is preferably between zero and a maximum rotor speed. For example, for the policy with maximum efficiency, there is no specific limit. For the resonance policy, some preferred range of use may be present, depending on the type of machine and its parameters.

In the present invention, the role of the magnetic rotor flux $\phi_{sp}$ and $\omega_s$ are exchanged with respect to the standard IRFOC algorithm.

Advantageously, the magnetic rotor flux $\phi_{sp}$ has a variable magnitude (as setpoint) dependent on a requested torque $T_{emSP}$, the actual rotor speed $\omega_r$ and the actual stator speed $\omega_s$, and/or some known (i.e. predetermined, such as e.g. a rotor resistance $R_r$, and/or the number of pairs of poles $n$) motor characteristics (that is to say, actually

$$\phi_{sp}^2 = R_r * T_{emSP}/(n * (\omega_s - \omega_r)),$$ which means that the magnetic rotor flux $\phi_{sp}$ is an internal output. In the initial (conventional) IRFOC, the setpoint $I_d$ is kept constant or equivalently $\psi_{rd}$ (as $I_d = L_m\psi_{rd}$ & $\psi_{rq} = 0$) and $\omega_g$ is adjusted using $\omega_g = R_r T_{emSP}/(n\psi_{rd}^2)$. Note that in the preceding notation $\phi_{SP} = \psi_{rd}$.

In our invention, $\omega_g$ is imposed by the resonance; so we turn $\psi_{rd}$ or $I_d$ variable, still using the above condition.

This allows to create the resonance 'everywhere', and to stand at the resonance. That is, this allows to place the machine at the resonance and to stay at the resonance, providing adjustment or regulation to stay nearby.

Advantageously, the stator speed $\omega_s$ is defined from an arbitrary policy.

This allows the writing of various policies while keeping the same algorithm helps reducing the size of microprocessor or equivalent. The inversion of the role of $\phi_{sp}$ and $\omega_s$, allows to write policies because $\omega_s$, is an essential component of the motor regime and is not anymore limited by the choice of $\phi_{sp}$ (via the setpoint of current $I_d$).

Advantageously, the rotor can also be equipped with one or more capacitors. Advantageously, the stator can be equipped with one or more capacitors.

Advantageously, only the rotor is equipped with one or more capacitors.

That is, when the rotor is equipped with one or more capacitor, the modified indirect field-oriented control algorithm is modified accordingly. That is to say, the rotor and/or the stator can be equipped with one or more capacitors.

Advantageously, the machine is a motor or a generator.

A second aspect of the present invention concerns a method for controlling an induction-based machine (IM) or an air-cored resonant-induction machine (ACRIM), having a rotor and a stator, comprising the steps of:

- retrieving an actual rotor speed ($\omega_r$) and a setpoint of rotor speed ($\omega_{rSP}$),

- setting a stator speed ($\omega_s$) based on the actual rotor speed ($\omega_r$), so as to stand the machine in a policy of machine control,

- using a modified indirect field-oriented control algorithm (IRFOC), with the set stator speed ($\omega_s$) and the actual rotor speed ($\omega_r$) as input, so that the actual rotor speed ($\omega_r$) tends to the setpoint of rotor speed ($\omega_{rSP}$).

This allows to provide a method for controlling the machine with the above mentioned advantages.

Advantageously, the policy of machine control is selected in the group consisting of a maximum efficiency policy, a maximum torque policy, or as constraints as a maximum voltage policy, or a maximum current policy.

This allows to provide different policies of machine control, so as to take the benefit of each. This also allows to improve the performances of the machine by mixing policies with respect to the context, e.g. maximum torque or resonant during acceleration, and maximum efficiency at steady points.

Advantageously, the stator speed is defined from an arbitrary policy.

Other features and advantages of the present invention will appear more clearly from the following detailed description of particular non-limitative examples of the invention, illustrated by the appended drawings where:

- figure 1 represents schematically an ACRIM stator,
- figure 2 represents the resonance in the $f_s$ - $f_r$ plane,
- figure 3 represents a close-up view of the resonance in motor mode,
- figure 4 represents a resonance policy in motor mode,
- figure 5 represents a locus of eigenvalues in motor mode and efficient useful zone,
- figure 6 represents a step response of a PI-controlled fast subsystem,
- figure 7 represents disk-based stability margins of compensated transfer,
- figure 8 represents test scenario with velocities expressed in Hertz,
- figure 9 represents a block diagram schematically illustrating the method of control.

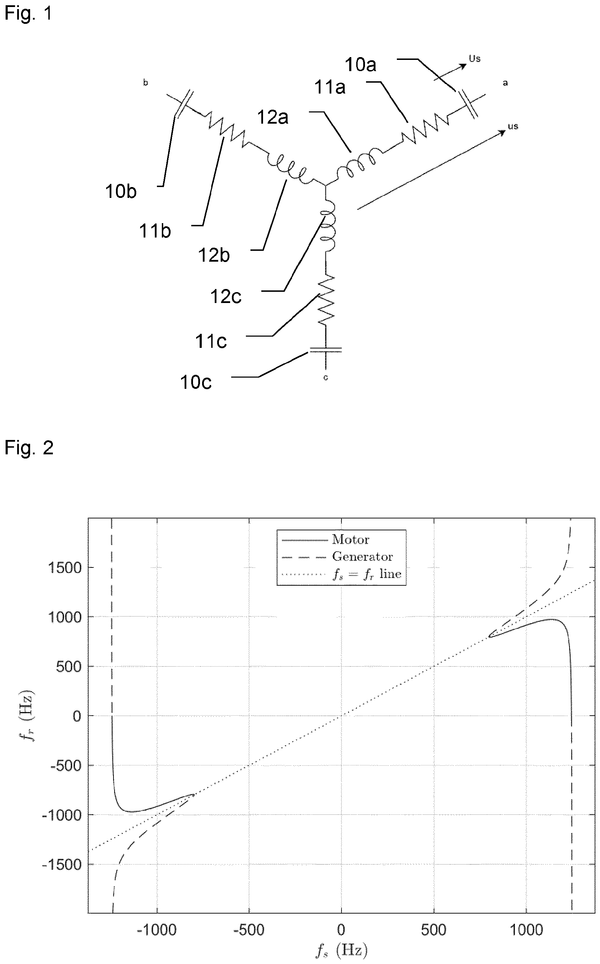

Figure 1 represents schematically an ACRIM stator.

I. Generalities

The ACRIM stator is represented in figure 1. It shows the added capacitors, here to each phase of the stator.

II. Model and peculiarities of the ACRIM

A. Model of the ACRIM

An ACRIM is in principle an induction motor, though with very different parameters, fit with a series capacitor $C_s$ in each stator phase (represented 10a, 10b, 10c in figure 1), as illustrated in figure 1. The motor is also equipped with resistances 11a, 11b, 11c and with inductances 12a, 12b, 12c. It therefore obeys nearly the same equations, the only difference being the presence of the capacitor voltage $U_s^{dq}$ in the stator voltage law (equation 1a), and of its evolution equation (1b). Therefore, the ACRIM model reads in the classical *dq* (stator synchronous) frame the following equations (1a-1g), where <*a, b* > = $a^T b$ is the scalar product.

The equations (1a, 1b, 1c, 1d, 1e, 1f and 1g) are:

$$\frac{d\psi_s^{dq}}{dt} + R_s i_s^{dq} + U_s^{dq} = u_s^{dq} - \omega_s J \psi_s^{dq} \qquad (1a)$$

$$C_s \frac{dU_s^{dq}}{dt} = i_s^{dq} - \omega_s C_s J U_s^{dq} \qquad (1b)$$

$$\frac{d\tilde{\psi}_r^{dq}}{dt} + R_r \tilde{i}_r^{dq} = (\omega_r - \omega_s)J\tilde{\psi}_r^{dq} \tag{1c}$$

$$\psi_s^{dq} = L_s i_s^{dq} + L_m \tilde{i}_r^{dq} \tag{1d}$$

$$\tilde{\psi}_r^{dq} = L_m i_s^{dq} + L_r \tilde{i}_r^{dq} \tag{1e}$$

$$\frac{J}{n}\frac{d\omega_r}{dt} = T_{em} - T_l \tag{1f}$$

$$T_{em} = nL_m < i_s^{dq}, J\tilde{i}_r^{dq} > \tag{1g}$$

The variables $U_s^{dq}$ (capacitor voltage), $\psi_s^{dq}$ (stator flux), $\tilde{\psi}_r^{dq}$ (rotor flux referred to stator), $i_s^{dq}$ (stator current), $\tilde{i}_r^{dq}$ (rotor current referred to stator) and $u_s^{dq}$ (stator voltage) are 2 × 1 vectors; $\omega_r$ (rotor velocity also called actual rotor speed), $\omega_s$ (stator velocity or stator speed also called actual current stator speed), $T_{em}$ (electromagnetic torque) and $T_l$ (load torque) are scalars; $C_s$, $R_s$, $R_r$, $L_s$, $L_r$, $L_m$, $J$, $n$ are constant parameters (possibly slowly-varying for $R_s$, $R_r$); finally, $J := \begin{pmatrix} 0 & -1 \\ 1 & 0 \end{pmatrix}$; notice that $< a, J * b >$ is then the 2D cross-product of $a$ and $b$. It is to be noted that SP means setpoint in the indices.

For simpler expressions in the sequel, we also introduce the identity matrix $I := \begin{pmatrix} 1 & 0 \\ 0 & 1 \end{pmatrix}$, and the slip velocity $\omega g := \omega s - \omega r$. The physical control input is the impressed potential $v_s^{\alpha\beta}$, and is related to $u_s^{dq}$ by $v_s^{\alpha\beta} = u_s^{\alpha\beta} = R(\theta_s)u_s^{dq}$ (we assume the motor is star-connected); the frame angle $\theta s$ is defined by $d\theta s/dt := \omega s$, and $R(\theta_s) := \begin{pmatrix} \cos\theta & -\sin\theta \\ \sin\theta & \cos\theta \end{pmatrix}$ is the rotation matrix with angle $\theta s$. Being chosen at will, the frame velocity can also be seen as a control input. On the other hand, the load torque $Tl$ is an unknown disturbance. Equations (1) are the fundamental physical relations obtained from an energy approach or a microscopic approach. They are not in state form, which is not needed at this point. A suitable state-space representation can then be derived for the purpose at hand (control, state estimation ...), as will be done hereafter. At steady state, the twelve variables $\psi_s^{dq}, U_s^{dq}, \tilde{\psi}_r^{dq}, i_s^{dq}, \tilde{i}_r^{dq}, \omega_r, T_{em}$ and the four inputs $u_s^{dq}, \omega_s, T_l$ are linked by the twelve relations.

The equations (2a, 2b, 2c, 2d, 2e, 2f and 2g) are reproduced below.

$$R_s \overline{i_s^{dq}} + \overline{U_s^{dq}} = \overline{u_s^{dq}} - \overline{\omega_s} J\overline{\psi_s^{dq}} \tag{2a}$$

$$0 = \overline{i_s^{dq}} - \overline{\omega_s} C_s J\overline{U_s^{dq}} \tag{2b}$$

$$R_r \overline{\tilde{i}_r^{dq}} = (\overline{\omega_r} - \overline{\omega_s}) J \overline{\tilde{\psi}_r^{dq}} \qquad (2c)$$

$$\overline{\psi_s^{dq}} = L_s \overline{i_s^{dq}} + L_m \overline{\tilde{i}_r^{dq}} \qquad (2d)$$

$$\overline{\tilde{\psi}_r^{dq}} = L_m \overline{i_s^{dq}} + L_r \overline{\tilde{i}_r^{dq}} \qquad (2e)$$

$$0 = \overline{T_{em}} - \overline{T_l} \qquad (2f)$$

$$\overline{T_{em}} = n L_m < \overline{i_s^{dq}}, J \overline{\tilde{i}_r^{dq}} > \qquad (2g)$$

Four primary quantities must therefore be chosen, the remaining twelve quantities being then determined from the steady-state relations. A convenient way to do this is as follows. First, we obviously have $T_{em} = T_l$ by (2f); second, multiplying both sides of (2c) by $J$ and using $J^2 = -I$ yields

$$R_r J \overline{\tilde{i}_r^{dq}} = -\overline{\omega_g} \overline{\tilde{\psi}_r^{dq}}$$

third, using (2e) and (2g) yields

$$\begin{aligned} \overline{\omega_g} \left| \overline{\tilde{\psi}_r^{dq}} \right|^2 &= < \overline{\tilde{\psi}_r^{dq}}, R_r J \overline{\tilde{i}_r^{dq}} > \\ &= R_r < L_m \overline{i_s^{dq}} + L_r \overline{\tilde{i}_r^{dq}}, J \overline{\tilde{i}_r^{dq}} > \\ &= R_r < L_m \overline{i_s^{dq}}, J \overline{\tilde{i}_r^{dq}} > \\ &= R_r \frac{\overline{T_l}}{n} \end{aligned} \qquad (3)$$

We then choose the operating point $\omega_r$, $Tl$, and either the magnitude and direction of $\tilde{\psi}_r^{dq}$ (which is the usual practice), or $\omega_s$ and the direction of $\tilde{\psi}_r^{dq}$ (which will be more convenient in the ACRIM case); notice that as the equations are invariant by a rotation of the vector variables, the direction of $\tilde{\psi}_r^{dq}$ is immaterial and can be chosen to zero without loss of generality. Finally, the remaining variables are obtained by using successively (2c), (2e), (2d), (2b) and (2a).

B. The resonance equation

The problem with an air-cored motor is that it requires in general a much higher voltage than a conventional motor. Thanks to the stator capacitors, the problem can be alleviated by operating at a resonance point, where the current vector $i_s^{dq}$ is parallel to the voltage vector $u_s^{dq}$, i.e. where the power factor is $\pm 1$. Equivalently, this means the total impedance seen from the stator terminals is purely resistive. In the following, we address the case where only the stator is equipped with a capacitor (so-called tuning option (c)), but a similar strategy is possible for the other cases (capacitor at rotor only, and capacitor on both).

We now show that the resonance condition $\dot{i}_s^{dq}$ parallel to $u_s^{dq}$, i.e. $< u_s^{dq}, J * i_s^{dq} > = 0$, corresponds in fact to a relation between $\omega_s$ and $\omega_r$. Eliminating $U_s^{dq}$ from (2a)-(2b), and using $< a, Ja > = 0, < Ja, Jb > = <a, b>$ gives

$$
\begin{aligned}
< C_s \overline{\omega_s} \overline{u_s^{dq}}, J\overline{\iota_s^{dq}} > &= C_s \overline{\omega_s}^2 < J\overline{\psi_s^{dq}}, J\overline{\iota_s^{dq}} > - < J\overline{\iota_s^{dq}}, J\overline{\iota_s^{dq}} > \\
&= C_s \overline{\omega_s}^2 < \overline{\psi_s^{dq}}, \overline{\iota_s^{dq}} > - |\overline{\iota_s^{dq}}|^2 \\
&= L_s C_s \overline{\omega_s}^2 |\overline{\iota_s^{dq}}|^2 - |\overline{\iota_s^{dq}}|^2 + L_m C_s \overline{\omega_s}^2 < \overline{\iota_r^{dq}}, \overline{\iota_s^{dq}} >
\end{aligned}
\tag{4}
$$

the last line stemming from (2d). On the other hand, eliminating $\tilde{\psi}_r^{dq}$ from (2c) and (2e) yields

$$
\left(R_r I + \overline{\omega_g} L_r J\right)\overline{\tilde{\iota}_r^{dq}} = -\overline{\omega_g} L_m J\overline{\iota_s^{dq}}
$$

Multiplying both sides by $(R_r * I - \omega_g L_r * J)$, and using $J^2 = -I$, yields

$$
\left(R_r^2 + \overline{\omega_g}^2 L_r^2\right)\overline{\tilde{\iota}_r^{dq}} = -\overline{\omega_g} L_m \left(R_r J + \overline{\omega_g} L_r I\right)\overline{\iota_s^{dq}}
$$

hence

$$
\left(R_r^2 + \overline{\omega_g}^2 L_r^2\right) < \overline{\tilde{\iota}_r^{dq}}, \overline{\iota_s^{dq}} > = -\overline{\omega_g^2} L_m L_r \left|\overline{\iota_s^{dq}}\right|^2
$$

Finally, injecting this in (4) produces

$$
< C_s \overline{\omega_s} \overline{u_s^{dq}}, J\overline{\iota_s^{dq}} > = L_s C_s \overline{\omega_s}^2 \left|\overline{\iota_s^{dq}}\right|^2 - \left|\overline{\iota_s^{dq}}\right|^2 - \frac{L_m^2 L_r C_s \overline{\omega_s}^2 \overline{\omega_g}^2}{R_r^2 + \overline{\omega_g}^2 L_r^2} \left|\overline{\iota_s^{dq}}\right|^2
$$

Therefore, the resonance condition amounts to

$$
L_s C_s \overline{\omega_s}^2 - 1 - \frac{L_m^2 L_r C_s \overline{\omega_s}^2 \overline{\omega_g}^2}{R_r^2 + \overline{\omega_g}^2 L_r^2} = 0
$$

that is,

$$
L_s C_s \overline{\omega_s}^2 = \frac{1 + \left(\frac{L_r}{R_r} \overline{\omega_g}\right)^2}{1 + \sigma \left(\frac{L_r}{R_r} \overline{\omega_g}\right)^2}
\tag{5}
$$

where $\sigma := 1 - L_m^2 / L_s L_r$ is the so-called leakage factor.

Table 1 shows the experimental data (rated values & parameters).

Table 1
EXPERIMENTAL MOTOR RATED VALUES AND
PARAMETERS.

| | |
|---|---|
| Rated power | 10 kW |
| Rated voltage (RMS) | 89.9V |
| Rated current (RMS) | 45.33 A |
| Rated flux (RMS) | 19.58 mWb |
| Rated stator frequency | 1023 Hz |
| Rated rotor frequency | 929 Hz |
| Rated torque | 5.14 N m |
| Rated efficiency | 81.8 % |
| Rated power factor | 1 |
| Number of pole pairs $n$ | 3 |
| Motor moment of inertia $J_m$ | 0.003 kg m$^2$ |
| Total moment of inertia $J$ | 0.1 kg m$^2$ |
| Rotor inductance $L_r$ | 939.75 $\mu$H |
| Stator inductance $L_s$ | 994.35 $\mu$H |
| Mutual inductance $L_m$ | 742.95 $\mu$H |
| Leakage factor $\sigma$ | 0.41 |
| Rotor resistance $R_r$ | 0.394$\Omega$ |
| Stator resistance $R_s$ | 0.198$\Omega$ |
| Stator capacitance $C_s$ | 40 $\mu$F |

C. Peculiarities of the ACRIM

We illustrate the peculiarities of the ACRIM with the example of an experimental motor, whose characteristics are listed in Table I. Because there is no ferromagnetic core, the inductance and rated flux values are much smaller than for a conventional IM with the same rated power; moreover, the leakage factor $\sigma$ is much larger (typically about 0.05 for a conventional IM). On the other hand, the rated frequencies are also much higher, so as to ensure a reasonable efficiency. The moment of inertia $J_m$ of the motor alone is very small, because of the rotor lightweight construction; of course, as soon as the motor is coupled to a mechanical load, the total moment inertia $J$ is usually much higher. The role of the stator capacitors is to decrease the rated voltage without changing the rated current: without them, this voltage would jump to 198 V, with a power factor of 0.45. Notice the capacitors do not change the efficiency; indeed by (2b),

$$< \overline{U_s^{dq}}, \overline{\iota_s^{dq}} > = < \overline{U_s^{dq}}, \overline{\omega_s} C_s J \overline{U_s^{dq}} > = 0$$

meaning the power in the capacitors is zero.

It should be emphasized that the ACRIM rated point strongly depends on the capacitance value $C_s$, and is the result of a delicate trade-off.

III. A control policy based on the resonance condition

We now study in detail the resonance condition (5). To keep things simple, we first rewrite it as

$$a\overline{\Omega_s}^2 = \frac{1 + \overline{\Omega_g}^2}{1 + \sigma\overline{\Omega_g}^2}$$

$$a := \left(\frac{R_r}{L_r}\right)^2 L_s C_s \text{, and } \overline{\Omega_{g,r,s}} := \frac{L_r}{R_r}\overline{\omega_{g,r,s}}$$

Where

This equation can be seen as a relation giving $\overline{\Omega_s}$ in function of $\overline{\Omega_r}$ as the roots of the fourth-order polynomial equation

$$a(1 + \sigma(\overline{\Omega_s} - \overline{\Omega_r})^2)\overline{\Omega_s}^2 - (\overline{\Omega_s} - \overline{\Omega_r})^2 + 1 = 0$$

As we want to establish a policy giving $\overline{\Omega_s}$ in function of $\overline{\Omega_r}$, we must understand how to select the "good" root among the four possibly existing real roots. To this end, we first rewrite the condition as

$$\overline{\Omega_g}^2 = \frac{a\overline{\Omega_s}^2 - 1}{1 - \sigma a\overline{\Omega_s}^2}$$

Which can be justified if and only if $\dfrac{1}{a} \le \overline{\Omega_s}^2 < \dfrac{1}{\sigma a}$. Clearly,

$$\overline{\Omega_r} = \overline{\Omega_s} \pm \sqrt{\frac{a\overline{\Omega_s}^2 - 1}{1 - \sigma a\overline{\Omega_s}^2}}$$

Figure 2 represents the resonance in the $f_s$ - $f_r$ plane wherein

$$f_{r,s} := \frac{1}{2\pi}\omega_{r,s}$$

That is to say, figure 2 represents the locus of the solutions of the resonance constraint (eq. 5 below); it also illustrated with respect to the motor vs generator mode that we may have between 1 and 4 solutions,

Remembering that by (3) $\overline{\Omega_g}$ and $T_l$ must have the same sign, and that $\overline{\Omega_r} * T_l$ is positive in motor mode and negative in generator mode, this yields the graph displayed in Fig. 2. We thus see that, for a given $\overline{\Omega_r}$, there is one resonant point in generator mode and one in motor mode when $|\overline{\Omega_r}|$ is below a minimum value (in our example about $2\pi \times 793$ rad s$^{-1}$); two resonant points in generator mode and two in motor mode when $|\Omega_r|$ is above this minimum value but below a maximum value (about $2\pi \times 972$ rad s$^{-1}$); and only two resonant points in generator mode when $|\overline{\Omega_r}|$ is above this maximum value.

That is, all these policies are related to the fact that $\omega_s$ is calculated as a function of $\omega_r$. For example for resonance, we use equation (5) which is a 4$^{th}$ order polynomial equation in $\omega_s$. The policies of the prior art revert to another calculation/choice of $\omega_s$ but the rest of the algorithm, i.e. the modified indirect FOC (IRFOC) remains valid.

In other words,

1- the speed controller gives the $T_{emSP}$ (as in IRFOC),

2 - then from $\omega_s$ chosen, we find $\omega_g = \omega_s - \omega_r$, from which we deduce $\phi_{sp}$ (as $\phi_{sp}^2 = R_r * T_{emSP}/(n * \omega_g)$ )

3 - from which the $i_{sSP}^{dq}$ (current setpoints) are classically derived (see eq (8) below).

That is, above mentioned 1 & 3 are classical (from IRFOC), and the present invention is about the resolution of $\omega_s$ for resonance, and step 2.

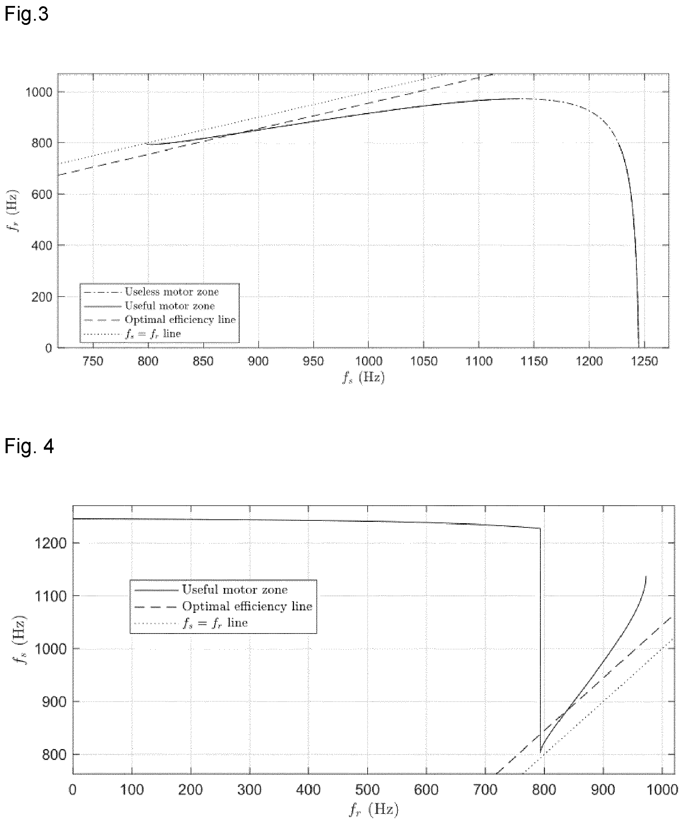

Figure 3 represents a close-up view of the resonance in motor mode. Interestingly it shows that the resonance may occur close to the optimum efficiency line resulting practically in a favourable situation.

It is also interesting to note that the central symmetry with respect to the origin, hence we need to study only the case where $\overline{\Omega_s}$ is positive. If we further concentrate on the motor mode, we get the close-up view in Fig. 3. In the intermediate zone where there are two resonant points for a given $\omega_r$, the "good" point is the more efficient one (i.e. the closer to the optimal efficiency line); where there is only one point, this is the only possibility to operate at resonance, though the efficiency is not very good.

Figure 4 represents the resonance policy in motor mode. It particularly illustrates the possibility to have discontinuous solution ($\omega_s$) when the rotor e.g. accelerates.

The resonance policy giving $\omega_s$ in function of $\omega_r$ is then obtained by taking the symmetric of the graph of Fig. 3 with respect to the diagonal (i.e. the $f_s = f_r$ line), and excluding the "useless" zone, which gives Fig. 4. Notice the discontinuity when switching between the two branches of the "useful motor zone" of Fig. 3.

IV. The control scheme

We introduce here the notion of $\omega_s$-driven FOC, which is a modification of standard FOC suited for the ACRIM.

A. A state form adapted to FOC

Choosing $\tilde{\psi}_r^{dq}$ and $i_s^{dq}$ besides $\omega_r$ and $U_s^{dq}$ as state variables, eliminating $\psi_s^{dq}$ and $\tilde{i}_r^{dq}$, and using $< i_s^{dq}, J i_s^{dq} >=0$, the ACRIM model (1) reads in state form

$$\frac{J}{n}\frac{d\omega_r}{dt} = n\frac{L_m}{L_r} < i_s^{dq}, J\tilde{\psi}_r^{dq} > -T_l \qquad (6a)$$

$$\frac{d\tilde{\psi}_r^{dq}}{dt} = -\frac{R_r}{L_r}\tilde{\psi}_r^{dq} - (\omega_s - \omega_r)J\tilde{\psi}_r^{dq} + \frac{R_r}{L_r}L_m i_s^{dq} \qquad (6b)$$

$$\sigma L_s \frac{di_s^{dq}}{dt} = u_s^{dq} - U_s^{dq} - \left(R_s + R_r\frac{L_m^2}{L_r^2}\right)i_s^{dq} - \sigma L_s\omega_s J i_s^{dq}$$
$$+ \frac{L_m}{L_r}(\frac{R_r}{L_r}\tilde{\psi}_r^{dq} - \omega_r J\tilde{\psi}_r^{dq}) \qquad (6c)$$

$$C_s \frac{dU_s^{dq}}{dt} = i_s^{dq} - \omega_s C_s J U_s^{dq} \qquad (6d)$$

This state form is well-adapted for designing a control law along the two-time-scale approach used in FOC. Indeed, assuming that $\omega_r$ and $\tilde{\psi}_r^{dq}$ are "slow" variables, the term

$$\frac{L_m}{L_r}(\frac{R_r}{L_r}\tilde{\psi}_r^{dq} - \omega_r J\tilde{\psi}_r^{dq})$$

in (6c) is seen as a "slow" (vector) disturbance $d^{dq}$ that can be rejected by a controller with integral effect. The "fast" variables $i_s^{dq}$ and $U_s^{dq}$ then evolve according to

$$\sigma L_s \frac{di_s^{dq}}{dt} = u_s^{dq} - U_s^{dq} - \left(R_s + R_r \frac{L_m^2}{L_r^2}\right) i_s^{dq} - \sigma L_s \omega_s J i_s^{dq} + d^{dq} \tag{7a}$$

$$C_s \frac{dU_s^{dq}}{dt} = i_s^{dq} - \omega_s C_s J U_s^{dq} \tag{7b}$$

The control problem is then split into two simpler subproblems: on the one hand controlling (7a) with a "fast" current loop; on the other hand controlling (6a)-(6b) with a "slow" velocity loop, as if $i_s^{dq}$ were the control input.

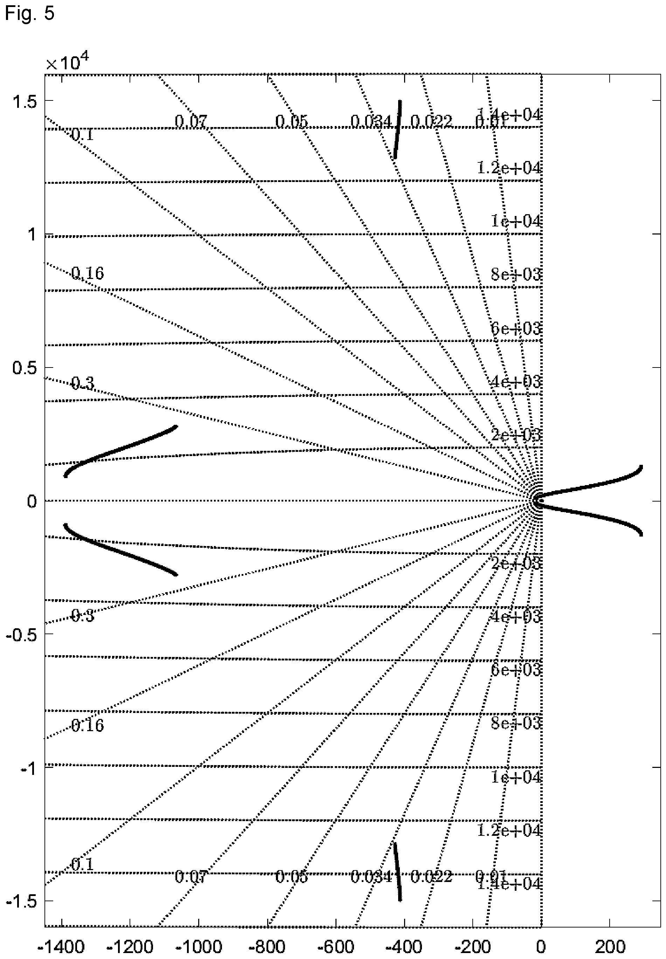

Figure 5 represents a locus of eigenvalues in motor mode and efficient useful zone, as some eigen values are in the positive real half-plane, the open loop control is unstable, and the close loop mandatory; in the negative half-plane, the other eigen values are standard to deal with.

B. Dynamic peculiarities of the ACRIM

Besides the static peculiarities mentioned in section II-C, the dynamic behaviour of the ACRIM is also very different from the conventional IM. Indeed, it is strongly unstable in much of its useful operating region, and in particular around its rated point. This can be seen by studying the seven eigenvalues of the tangent linearization of (6).

To this end, Fig. 5 displays the locus of these eigenvalues, for $\omega_r$ stepping through the efficient useful zone of Fig. 3, and $T_l$ varying from 0 to twice the rated torque. Notice that the thickness of the eigenvalue traces is due to the variation of $T_l$ for each single $\omega_r$.

Very roughly speaking, the four traces with large negative real parts correspond to the "fast" subsystem (6c)-(6d); the resonance phenomenon is the cause of the very large imaginary parts. The three traces with mostly positive real parts correspond to the "slow" subsystem (6a)-(6b); notice there is a small hardly visible real trace near the origin, also mainly in the right half-plane. In fact the two subsystems are quite coupled, and the resonant coupling is responsible for the unstable behaviour; indeed, the air-cored motor by itself, without the capacitors, is stable.

A practical consequence of the ACRIM dynamic instability, is that the motor cannot be operated at the resonance with e.g. a simple open-loop V/f control law; closed-loop control is thus imperative.

C. Classical FOC and $\omega_s$-driven FOC

We first review the classical (indirect) FOC method in a setting adapted to our needs. The goal is to run the motor at the rotor velocity setpoint $\omega_{rSP}$ and rotor flux set point

$$\tilde{\psi}_{rSP}^{dq} := \begin{pmatrix} \phi_{SP} \\ 0 \end{pmatrix}$$

with $\omega_{rSP}$ and $\phi_{SP}$ possibly time-varying, despite the (usually unknown) load torque $T_l$, $\phi_{SP}$ being the magnetic rotor flux setpoint.

The method comprises three steps:

1) Velocity loop; from $\omega_{rSP}$ and the measurement of $\omega_r$, the electromagnetic torque setpoint $T_{emSP}$ is produced; this loop correctly controls $\omega_r$ provided the actual torque $T_{em}$ is close to the desired $T_{emSP}$.

2) Flux orientation; from $T_{emSP}$ and $\tilde{\psi}_{rSP}^{dq}$, the control $\omega_s$ and the current setpoint $i_{sSP}^{dq}$ are produced.

3) Current loop; from $i_{sSP}^{dq}$ and the measurement of $i_s^{dq}$, the control $u_s^{dq}$ is produced.

The rationale is the following. Assume the current loop is fast enough so that $i_s^{dq}$ rapidly converges to $i_{sSP}^{dq}$ . If the current setpoint

$i_{sSP}^{dq}$ is taken as

$$\frac{R_r}{L_r} L_m i_{sSP}^{dq} := \frac{d\tilde{\psi}_{rSP}^{dq}}{dt} + \frac{R_r}{L_r} \tilde{\psi}_{rSP}^{dq} + \lambda J \tilde{\psi}_{rSP}^{dq} \qquad (8)$$

With $\lambda$ yet to determine, the flux error $\Delta\tilde{\psi}_r^{dq} := \tilde{\psi}_r^{dq} - \tilde{\psi}_{rSP}^{dq}$ satisfies from (6b)

$$\frac{d\Delta\tilde{\psi}_r^{dq}}{dt} = -\frac{R_r}{L_r} \tilde{\psi}_r^{dq} - \omega_g J \tilde{\psi}_r^{dq} + \frac{R_r}{L_r} L_m i_s^{dq} - \frac{d\tilde{\psi}_{rSP}^{dq}}{dt}$$

$$\rightarrow -\frac{R_r}{L_r} \tilde{\psi}_r^{dq} - \omega_g J \tilde{\psi}_r^{dq} + \frac{R_r}{L_r} L_m i_{sSP}^{dq} - \frac{d\tilde{\psi}_{rSP}^{dq}}{dt}$$

$$= -\left(\frac{R_r}{L_r} I + \omega_g J\right) \Delta\tilde{\psi}_r^{dq} + (\lambda - \omega_g) J \tilde{\psi}_{rSP}^{dq}$$

If we choose $\omega_g = \lambda$, i.e. $\omega_s = \lambda + \omega_r$, the flux error obviously exponentially converges to zero with the time

constant $L_r / R_r$. In other words, with this choice of the control input $\omega_s$, the flux orients itself to the desired $\tilde{\psi}_{rSP}^{dq}$ , hence the name "Field-Oriented Control". On the other hand,

$$T_{em} = n \frac{L_m}{L_r} < i_s^{dq}, J \tilde{\psi}_r^{dq} >$$

$$\rightarrow n \frac{L_m}{L_r} < i_{sSP}^{dq}, J \tilde{\psi}_{rSP}^{dq} >$$

$$= \frac{n}{R_r} < \frac{d\tilde{\psi}_{rSP}^{dq}}{dt}, J \tilde{\psi}_{rSP}^{dq} > + \frac{n}{L_r} < \tilde{\psi}_{rSP}^{dq}, J \tilde{\psi}_{rSP}^{dq} > + \frac{\lambda n}{R_r} < J \tilde{\psi}_{rSP}^{dq}, J \tilde{\psi}_{rSP}^{dq} >$$

$$= \frac{n}{R_r} < \begin{pmatrix} \frac{d\phi_{SP}}{dt} \\ 0 \end{pmatrix}, \begin{pmatrix} 0 \\ \phi_{SP} \end{pmatrix} > + \frac{\lambda n}{R_r} < \tilde{\psi}_{rSP}^{dq}, \tilde{\psi}_{rSP}^{dq} >$$

$$= \frac{\lambda n}{R_r} \phi_{SP}^2$$

Therefore, setting $\lambda := \frac{R_r}{n\psi_{Sp}^2} T_{emSP}$ yields $T_{em} \rightarrow T_{emSP}$

The mechanical equation (6a) then tends to

$$\frac{J}{n} \frac{d\omega_r}{dt} = T_{emSP} - T_l$$

hence can be controlled by the velocity loop.

We emphasize the method relies on a two-time-scale assumption: the current loop must be much faster than the rotor flux time constant $L_r / R_r$ and the velocity loop. For the conventional IM, this is usually easily doable, as the open-loop stator current dynamics is already rather fast. For the ACRIM, this is somewhat more delicate, as the natural time scales are not so-well separated (see previous section).

The principle of $\omega_s$-driven FOC is simply to exchange the role of $\phi_{SP}$ and $\omega_s$: the goal is now to run the motor at a desired $\omega_{rSP}$ as before, but with a given $\omega_s$ (implicitly $\omega_g$); and $\phi_{SP}$ is now determined in step 2) using the same but reversed relation $\phi_{SP}^2 = R_r T_{emSP}/n\omega_g$. Steps 1) and 3) are otherwise unchanged. There are nevertheless two issues to address: on the one hand, an approximate derivative of $\phi_{SP}$ must be generated for use in (8).

On the other hand, the choice $(\Phi_{SP})2 = R_r T_{emSP} / n\omega_g$ is of course possible only when the right hand-side is positive. In some cases, for instance during a large deceleration, $T_{emSP}$ may become negative, and the only way to stay at resonance is to switch from the "motor" branch (dashed line) in Fig. 3 (where $\omega_s \geq \omega_r$, i.e. $\omega_g \geq 0$) to the "generator" branch (plain line) (where $\omega_g < 0$); as this happens in rather exceptional conditions, we rule out this case to keep things simple.

D. The velocity loop

Exactly as in standard FOC, the velocity loop in $\omega_s$-driven FOC is just a PI controller as in standard FOC

$$\frac{d\mu}{dt} = k_i(\omega_r - \omega_{rSP})$$

$$T_{emSP} = -k_p\omega_r - \mu$$

For the test motor, the tuning k := 0.74 and $ki$ := 8.22 gives a good result.

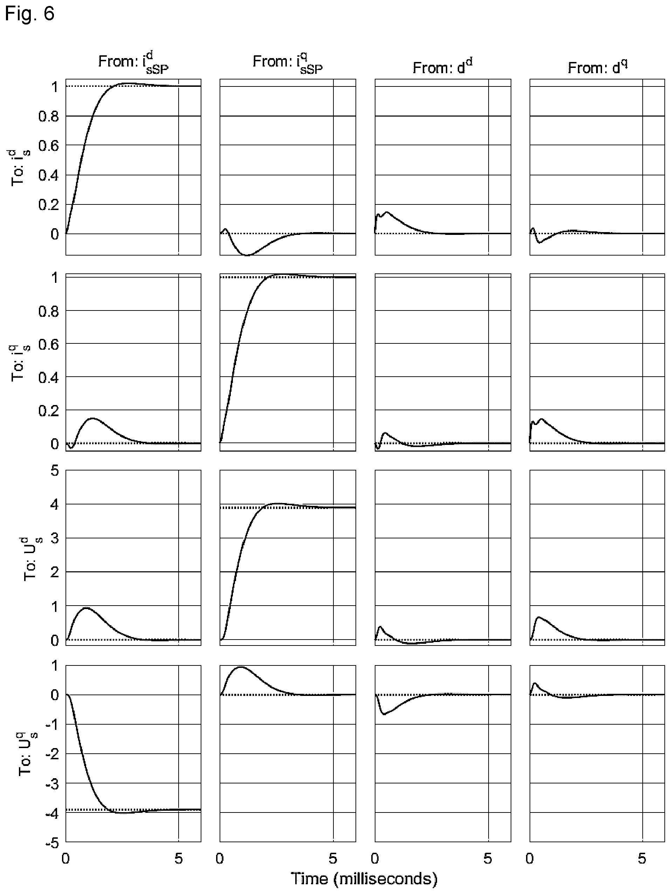

Figure 6 represents a step response of a PI-controlled fast subsystem. It is the classical output of the MATLAB function step, it illustrates the response of a MIMO system (4 inputs a.k.a. 'from', 4 outputs a.k.a. 'to') to a step function; one can subjectively judge the stability of each response.

E. The fast current loop

The current loop for the ACRIM is more complicated because of the capacitors. Indeed, the "fast" subsystem (7a) is truly Multiple-Input Multiple-Output, with dimension 4, and moreover depending on $\omega_s$. In the standard case without capacitors, it simply consists of two uncoupled one-dimensional subsystems (but for the harmless term $\sigma L_s\omega_s J i^{dq}_s$, which can be compensated if desired), easily controlled by the simple PI controller

$$\frac{dv^{dq}}{dt} = K_i\big(i_s^{dq} - i_{sSP}^{dq}\big)$$

$$u_s^{dq} = -K_p i_s^{dq} - v^{dq}$$

Nevertheless, it turns out that this simple PI controller still does the job, at the expense of a specific tuning depending on $\sigma L_s$ and $C_s$. On the test motor, the tuning K := 3.8954 and $K_i$ := 5784.2 ensures both a good dynamic behaviour and a comfortable robustness: the 2 %-settling time in tracking and disturbance rejection is about 1.9 ms, as illustrated in figure 6.

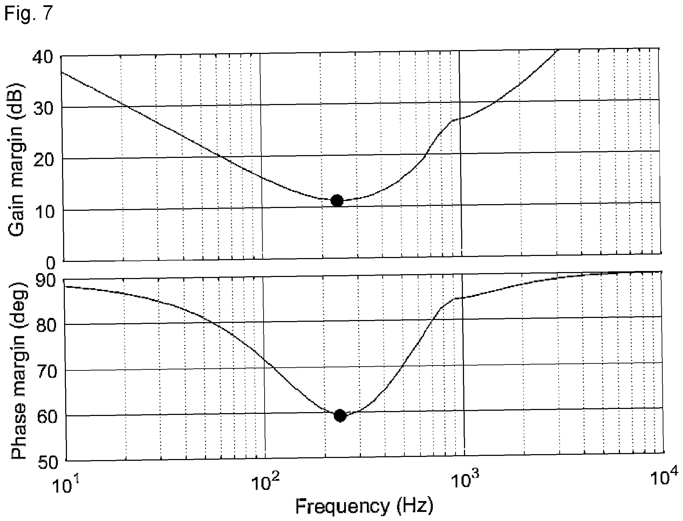

Figure 7 represents disk-based stability margins of compensated transfer. It is the classical Bode plot; the black dot is the most critical point clarifying the awaited margins.

The gain margin is 11.2 dB, the phase margin is 59∘ as illustrated in figure 7 (we use disk-based margins, which are true robustness indicators for MIMO systems, as explained in P. Seiler, A. Packard and P. Gahiner, "An introduction to disk margins [Lecture Notes], IEEE Control systems Magazine, vol. 40 no 5, pp 78-95, 2020). These figures are for $\omega_s$ near its rated value, but remain satisfying in a large range of stator velocities; the tuning could moreover be scheduled with $\omega_s$ if deemed necessary.

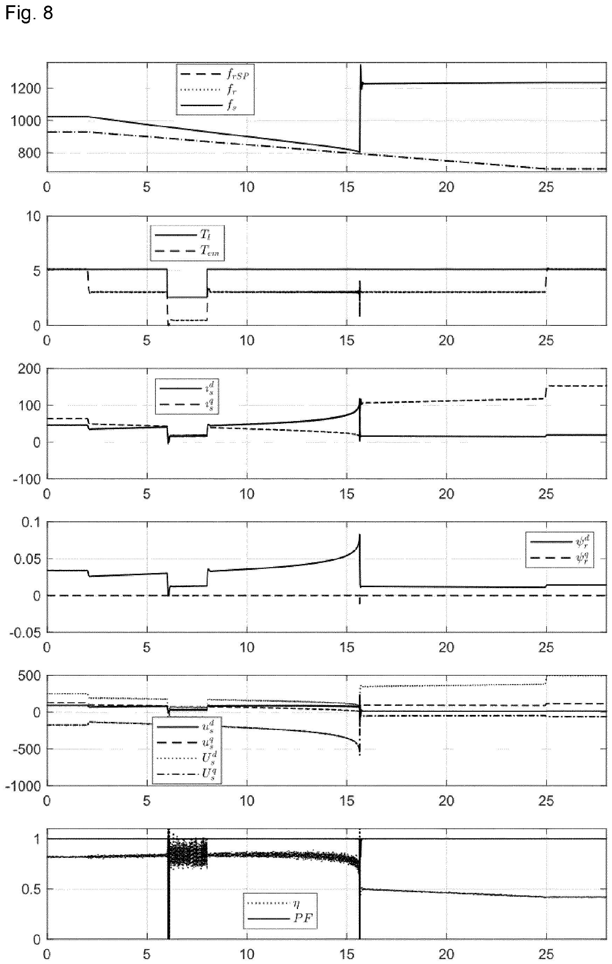

Figure 8 represents test scenario with velocities expressed in Hertz. The main information is on the last graph revealing that the power factor (PF) is indeed one, and that, all over the experiment; one can also observed among other things, how the input stator voltage is reduced and transferred to the capacitor ($u_s$ vs. $U_s$).

V. Simulation results

We illustrate the good behaviour of the proposed control scheme in simulation on the following scenario, as illustrated in figure 8: at t = 0 s, the motor starts in the rated steady state; it must stay there until t = 2 s, and is then ramped down to 700 Hz in about 23 s, where it must stay until the end of the simulation. In addition, the load torque is suddenly changed to half the rated torque at $t$ = 6 s, then back to the rated torque at $t$ = 8 s.

The velocity and currents feeding the controller are corrupted by band-limited white noise, to assess its performance in the face of measurement noise.

The controller performs very well, the actual rotor velocity $\omega_r$ very closely following its setpoint $\omega_{rSP}$, as shown in figure 8 (top view).

The power factor PF is always equal to one (see figure 8 bottom view), hence the motor always operates as desired at the resonant stator frequency; as a consequence, the stator voltage is kept small, whereas the capacitor voltage is much larger.

Also notice that at about t = 15.5 s, the velocity crosses the discontinuity visible in figure 4, resulting as anticipated in a sudden drop of the efficiency $\eta$.

That is, we have presented a strategy for the closed-loop control of an Air-Cored Resonant Induction Motor. It relies on a policy selecting the "good" stator velocity $\omega_s$ as a function of the rotor velocity $\omega_r$, which is then fed to a modified version of (indirect) Field-Oriented Control. The specific policy used in the specific example, namely always being at resonance, it not the only conceivable one, but is just an effective means to limit the supply voltage. The control scheme would still work with a different policy.

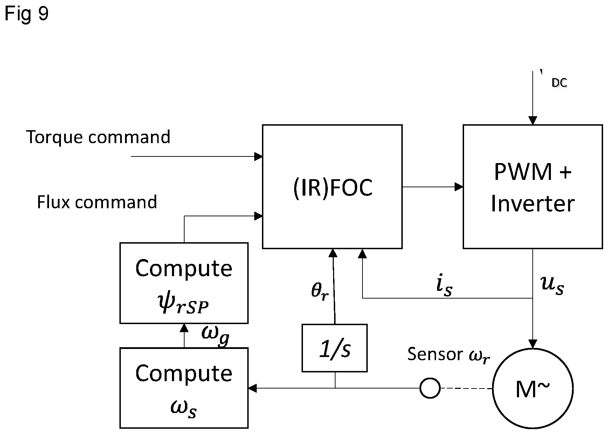

Figure 9 represents a block diagram schematically illustrating the method of control.

That is, the method according to the present invention uses a standard IRFOC algorithm modified to take as inputs at least the actual rotor speed and the setpoint of rotor speed. The actual rotor speed ($\omega_r$) may be retrieved from a sensor, and the rotor speed setpoint is the speed of use desired by the user or imposed in case of functioning as a generator. The further inputs may be the actual stator currents in dq frame (or adding classically as input an extra rotor speed yielding an arbitrary rotor position by integration, hence allowing the Park's transformation). The modified IRFOC algorithm may deliver as output the stator $u_s$ voltage to be realized (either dq or per phase, usually feed to the PWM module i.e. Pulse width modulation module). Then, the IRFOC algorithm internally classically transforms the rotor speed error into an electrical torque setpoint; and specifically, first estimates and imposes depending on the selected policy, a stator electrical speed ($\omega_s$, from which a variable rotor flux setpoint is inferred (as $\phi_{SP}^2 = R_r T_{emSP}/n\omega_g$ )

Figure 9 shows the IRFOC, the sensor for retrieving $\omega_r$, the computation of $\omega_s$, the computation of $\tilde{\psi}_{rSP}^{dq}$ , the integrator, the inverter, the PWM module, the torque command, the flux command, the motor and the voltages and currents.

It is of course understood that obvious improvements and/or modifications for one skilled in the art may be implemented, still being under the scope of the invention as it is defined by the appended claims.

**Claims**

1. A method for controlling an induction-based machine (IM) or an air-cored resonant-induction machine (ACRIM), having a rotor and a stator, comprising the steps of:

    - retrieving an actual rotor speed ($\omega_r$) and a setpoint of rotor speed ($\omega_{rSP}$),
    - setting a stator speed ($\omega_s$) based on the actual rotor speed ($\omega_r$), so as to stand the machine in an electrical resonance,
    - using a modified indirect field-oriented control algorithm (IRFOC), with the set stator speed ($\omega_s$) and the actual rotor speed ($\omega_r$) as input, so that the actual rotor speed ($\omega_r$) tends to the setpoint of rotor speed ($\omega_{rSP}$).

2. The method according to claim 1, wherein in the electrical resonance, a reactance of the machine appears as suppressed.

3. The method according to any one of claims 1 to 2, wherein the actual rotor speed ($\omega_r$) is between zero and a maximum rotor speed.

4.  The method according to any one of claims 1 to 3, wherein a magnetic rotor flux ($\phi_{sp}$) has a variable magnitude dependent on a requested torque ($T_{em}$), the actual rotor speed ($\omega_r$) and the actual stator speed ($\omega_s$).

5.  The method according to any one of claims 1 to 4, wherein the machine is a motor or a generator.

6.  A method for controlling an induction-based machine (IM) or an air-cored resonant-induction machine (ACRIM), having a rotor and a stator, comprising the steps of:

    - retrieving an actual rotor speed ($\omega_r$) and a setpoint of rotor speed ($\omega_{rSP}$),
    - setting a stator speed ($\omega_s$) based on the actual rotor speed ($\omega_r$), so as to stand the machine in a policy of machine control,
    - using a modified indirect field-oriented control algorithm (IRFOC), with the set stator speed ($\omega_s$) and the actual rotor speed ($\omega_r$) as input, so that the actual rotor speed ($\omega_r$) tends to the setpoint of rotor speed ($\omega_{rSP}$),

7.  The method according to claim 6, wherein the stator speed ($\omega_s$) is defined from an arbitrary policy.

8.  The method according to claim 6, wherein the policy of machine control is selected in the group consisting of a maximum efficiency policy, a maximum torque policy, or as constraints, a maximum voltage policy, or a maximum current policy.

Fig. 1

Fig. 2

Fig.3

Fig. 4

Fig. 5

Fig. 6

Fig. 7

Fig. 8

Fig 9

Europäisches
Patentamt

European
Patent Office

Office européen
des brevets

# EUROPEAN SEARCH REPORT

**Application Number**

EP 22 30 6156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JIN ZHAO ET AL: "Air-Cored Resonant Induction Machines: Comparison of Capacitor Tuning Criteria and Experimental Validation", IEEE TRANSACTIONS ON INDUSTRY APPLICATIONS, IEEE SERVICE CENTER, PISCATAWAY, NJ, US, vol. 57, no. 4, 27 April 2021 (2021-04-27), pages 3595-3606, XP011866721, ISSN: 0093-9994, DOI: 10.1109/TIA.2021.3075646 [retrieved on 2021-07-15] * abstract * | 1-8 | INV. H02P25/062 |
| A | KR 101 861 023 B1 (FOUND RES & BUSINESS SEOUL NAT UNIV SCI & TECH [KR]) 24 May 2018 (2018-05-24) * paragraph [0035] - paragraph [0038]; figures 1,2,4 * * paragraph [0052] - paragraph [0055] * | 1-8 | |
| A | EP 3 070 836 A1 (DEERE & CO [US]) 21 September 2016 (2016-09-21) * abstract * | 1-8 | TECHNICAL FIELDS SEARCHED (IPC) H02P |

The present search report has been drawn up for all claims

| Place of search | Date of completion of the search | Examiner |
|---|---|---|
| Munich | 4 January 2023 | Hascher, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 30 6156**

This annex lists the patent family members relating to the patent documents cited in the above-mentioned European search report.
The members are as contained in the European Patent Office EDP file on
The European Patent Office is in no way liable for these particulars which are merely given for the purpose of information.

**04-01-2023**

| Patent document cited in search report | | Publication date | Patent family member(s) | | Publication date |
|---|---|---|---|---|---|
| KR 101861023 | B1 | 24-05-2018 | NONE | | |
| EP 3070836 | A1 | 21-09-2016 | CN 106026820 A | | 12-10-2016 |
| | | | EP 3070836 A1 | | 21-09-2016 |
| | | | US 2016276971 A1 | | 22-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. JIN ; M. LACCHETTI ; A. SMITH ; R. DEODHAR ; Y. KOMI ; A. ABDUALLAH ; C. UMEMURA ; K. MISHIMA.** Air-cored resonant induction machines: Comparison of capacitor tuning criteria and experimental validation. *IEEE Transactions on Industry Applications,* 2021, vol. 57 (4), 3595-3606

- **P. SEILER ; A. PACKARD ; P. GAHINER.** An introduction to disk margins [Lecture Notes. *IEEE Control systems Magazine,* 2020, vol. 40 (5), 78-95